# EUROPEAN PATENT APPLICATION

(11) **EP 1 361 721 A1**
(43) Date of publication of application: **12.11.2003**
(21) Application number: 02360146.1
(22) Date of filing: 06.05.2002
(51) Int. Cl.: H04L 29/06

(54) **Method for transporting data segments and corresponding transmitter and receiver**

(71) Applicant: ALCATEL, 75008 Paris (FR)
(72) Inventor: Soulie, Antoine, 75014 Paris (FR)
(74) Representative: Urlichs, Stefan, Dipl.-Phys.

(57) **Abstract**

The invention relates to a method for transporting data segments from a transmitter (11,13) to a receiver (13,11) over a radio link (12), said data segments being protected by a first end-to-end error correction protocol, the transmission over said radio link (12) being further protected by a second error correction protocol.

According to the invention, the method comprises the steps of:
- acknowledging properly received data segments before their transmission on said radio link (12);
- encapsulating said data segments in a protocol data unit of said second error correction protocol;
- transmitting said protocol data unit on said radio link (12) to said receiver (13,11);
- correcting potential errors on said radio link (12) by using said second error correction protocol.

## Description

### BACKGROUND OF THE INVENTION

The present invention relates to the end-to-end data transmission over a radio access network between the core network of a radio communication network and an end-user terminal.

Data transmission on a radio access network can as known in the art be performed the following way:

In the downlink direction from the core network to the end-user:

A Transport Control Protocol (TCP) segment securing an Internet Protocol (IP) packet in the core network is received at the base station subsystem (BSS). The data segment is encapsulated in a Radio Link Control (RLC) protocol data unit (PDU) at the BSS in order to be transmitted on the radio link. The RLC protocol is a standard protocol used in GSM/GPRS/EDGE network in order to secure data transmitted on the air interface. This protocol is further described in GSM specification 3GPP 04460 Once properly received at the end-user terminal, after retransmission if necessary, the data segment is extracted from the RLC PDU. The end-user terminates the TCP protocol in that it checks if the TCP segment is error free and has been properly transmitted.

If the TCP segment is error-free, the end-user terminal generates a TCP acknowledgment which is encapsulated in a RLC packet and transmitted over the air interface to the BSS. The BSS extracts the TCP acknowledgement and forwards it transparently to the core network. The TCP segment originator then knows that the TCP segment has been properly received.

If the TCP segment is not error-free, the end-user terminal does not acknowledge the TCP segment. This implies that the TCP segment originator has to retransmit the packet once more when a predefined expiry timer has expired.

The drawback of this solution is that the TCP expiry timer is too short to take into account the round trip delay over the air interface. As a consequence, in many cases, the expiry timer expires at the originator before the end-user terminal has received the TCP segment although no transmission error has occurred. The data segment is then unnecessarily repeated over the air interface which causes network congestion and a drastic throughput reduction.

A particular object of the present invention is to provide a method for end-to-end transmission of data segments which prevents unnecessary repetitions of already sent data segments and improve the data segment throughput.

Another object of the invention is to provide a transmitter adapted to perform such a method.

### SUMMARY OF THE INVENTION

These objects, and others that appear below, are achieved by a method for transporting data segments from a transmitter to a receiver over a radio link according to claim 1, a transmitter according to claim 6 and a radio communication system according to claim 9.

According to the present invention, the data segments properly received at an entity located just before the radio link are acknowledged by this entity, further encapsulated in a error correction protocol data unit adapted to the radio link and transmitted on the radio link.

The method according to the present invention presents the advantage of sending an acknowledgement, if the data segment is properly received, before the data segment is transmitted over the radio link. The error correction protocol adapted to the radio link is responsible for correcting errors happening on the radio link.

An further advantageous feature of the method consists in deleting a data segment acknowledgement received from the end-user terminal over the radio link if this acknowledgement has already been generated before transmitting the data segment over the radio link. This presents the advantage to reduce the unnecessary acknowledgement traffic.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a radio communication network where the method according to the present invention can be implemented;
- Figure 2 shows a diagram representing the different steps of the method according to the present invention;
- Figure 3 shows an implementation of the invention in a BSS.

### DETAILED DESCRIPTION OF THE INVENTION

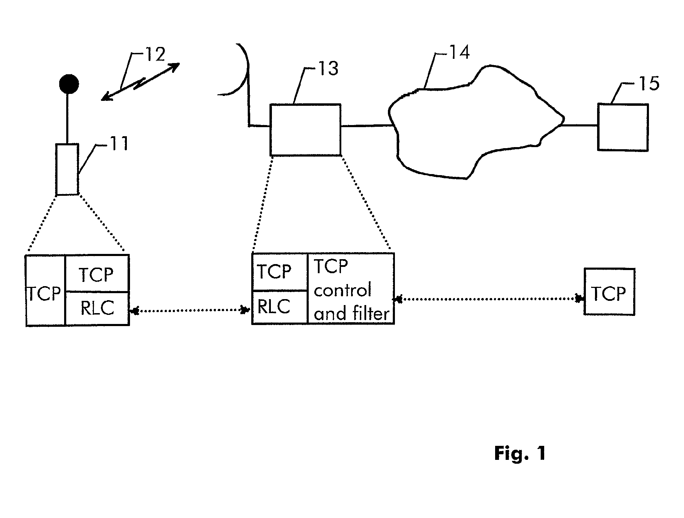

Figure 1 shows a radio communication network where the method according to the present invention can be implemented. The radio communication network comprises a end-user terminal 11, a radio link 12, a base station sub-system 13, a core network 14 and a second end-user terminal 15.

End-user terminal 11 is connectable over radio link 12 to base station sub-system 13 itself connected to core network 14. Core network 14 may be a GSM/GPRS/EDGE or UMTS core network. End-user terminal 11 and second end-user terminal 15 may establish a connection with each other. This connection is preferably a data connection for transferring for example pure data or packetized voice. The data are protected with an end-to-end error correction protocol preferably but not restricted to TCP (Transfer Control Protocol). For sake of simplicity, the TCP error protection protocol will be used in the rest of the description. It will be clear to a person skilled in the art that any equivalent end-to-end error correction protocol can be used instead of TCP.

A TCP protocol stack is implemented at both end-user 11 and end-user 15.

As known in the art, radio link 12 is particularly affected by propagation impairments and subject to transmission errors. That is why an error correction protocol is specifically used to protect data crossing radio link 12. This error correction protocol specifically adapted to the radio link may be RLC (Radio Link Control) protocol as defined in GSM specification 3GPP 04460. In prior art, the end-to-end correction protocol as well as the radio link error correction protocol work independently of each other. The TCP segments are then encapsulated in RLC PDUs (protocol data units) before being transmitted on the radio link at end-user terminal 1 for uplink traffic respectively at base station sub-system 13 for downlink traffic. The TCP segments are decapsulated from RLC PDUs for further processing on the other side of radio link 12 at base station subsystem 13 respectively at end-user terminal 11. Considering the ISO/OSI model, this encapsulation /decapsulation mechanism is equivalent with a RLC layer being put below the TCP protocol stack.

Usually, the base station subsystem does not directly has knowledge of the content of the TCP segments. Those are segmented in several RLC PDUs prior to transmission on the radio link. According to the present invention, the TCP segment identifiers can be extracted from the RLC PDU at the base station subsystem and checked for correctness.

As a consequence, the base station subsystem acts as means of discovering that the network did not transmit a TCP segment by spotting a hole in the TCP segments identifiers suit. The base station sub-system acknowledges all the previous segments up to but not including the missing one to the core network.

When the base station sub-system performs this acknowledgment, the end-user terminal may not have acknowledged all the previous segments, therefore it is up to the base station sub-system to secure the unacknowledged segments and possibly retransmit them if they turn out to be not acknowledged by the mobile.

In a preferred embodiment of the present invention, if several TCP segments are repeated by the core network, some of them being already acknowledged by the mobile, the base station sub-system shall filter them out.

This process of filtering out some TCP segments and repeating some of them directly impacts the RLC protocol. The Core Network sends RLC PDUs with increasing order, each PDU identifier is increased by one with respect to the previous one. The same way, the core network expects to receive uplink RLC PDU with an identifier in increasing order.

When a TCP segment belonging to the downlink direction is missing, the early transmission of a non acknowledgement by the base station sub-system implies that the base station sub-system generates a PDU directed to the core network with a valid PDU identifier. The PDU identifier of the next expected uplink PDU may have the same PDU identifier as that of the PDU just generated by the base station sub-system, hence, the PDU identifier of all the following uplink PDUs shall be increased by the amount of base station sub-system generated PDUs.

In the downlink direction, repeated TCP segments shall be filtered out if the base station sub-system already received their acknowledgment from the mobile. This means that between two downlink PDUs transmission to the mobile, the PDU identifier may not be immediately consecutive to the PDUs containing the TCP segment are actually not sent. The base station sub-system shall therefore, upon reception of a PDU following the filtering out of N PDUs, reduce the PDU identifier by a value of N.

In the case of properly sent TCP segments to the mobile that are not acknowledged, the base station sub-system shall repeat the missing TCP segment by reusing the securised PDU and changing the PDU identifier, so as to reflect the actual PDU order.

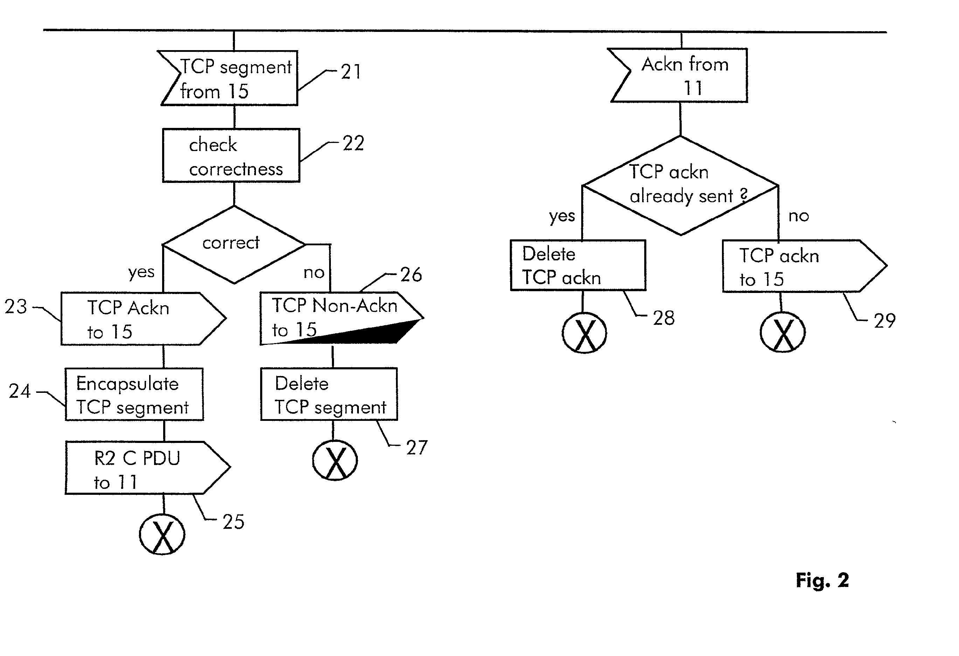

The characteristics of the present invention will be detailed with regard to the different steps of the method for transmitting TCP segments illustrated in figure 2.

For sake of simplicity the method will be described for a data communication originating from end-user terminal 15 and destined to end-user terminal 11 (i.e. downlink communication on radio link 14). It will be clear for a person skilled in the art that the method according to the present invention can also be used symmetrically (i.e. uplink connection on radio link 14) and that protection is thought for both directions of communication.

The different steps of the method according to the present invention are performed at base station sub-system 13.
- Step 21 consists in receiving a TCP segment at base station subsystem 13from end-user 15 destined to end-user 11
- Step 22 consists in checking the correctness of TCP segment. (segment number in sequence with the previously received TCP segment, TCP timer not expired ...)
   Steps 23 to 25 are executed if the check was correct.
- Step 23 consists, if the TCP segment was correctly received in sending a TCP acknowledgement for this TCP segment to end-user 15.
- Step 24 consists in encapsulating the correct received TCP segment in a RLC PDU
- Step 25 consists in transmitting the RLC PDU to end-user 11.
   Steps 26 to 27 are executed if the check was incorrect.
- Step 26 consists in sending a TCP non-acknowledgement to end-user 15.
- Step 27 consists in deleting the received incorrect TCP segment.

According to the present invention, it is the task of base station subsystem 13, entity situated just before radio link 12, to look inside the TCP segments and check for correctness of the TCP identifier suit in order to send an early acknowledgement or non acknowledgement to the originator before forwarding the TCP segments encapsulated in RLC PDUs on the radio link. The advantage of this method is that the TCP protocol is no more subject to delays implied by the radio link.

In a preferred embodiment of the invention, a check is performed between step 21 and 22 to detect if the received TCP segment is an unnecessarily repeated one. If it is not the case, steps 22 to 27 are performed. On the contrary if the segment an unnecessarily repeated one, this segment is deleted and not forwarded on the radio link since an acknowledgement of this segment must have been previously transmitted to the originator end-user 15.

In another preferred embodiment of the invention, consists in handling specifically TCP acknowledgement received from end-user 11 and destined to end-user 15 (step 28). Indeed, the present invention necessitates no modification of the implementation of end-user 11 considered as receiver. As a consequence, upon receipt of a correct TCP segment, end-user 11 generates a TCP acknowledgement.

If an acknowledgement for this TCP segment has already been sent earlier by the base station sub-system 13 according to the present invention, it is advantageous to delete this TCP acknowledgement at base station subsystem 13 and not to forward it to end user 15 (step 29).

If no such acknowledgement has been previously sent by base station sub system 13, then the acknowledgement is forwarded to end-user 15 (step 30).

An example for the acknowledgment process at the base station sub-system is detailed below.

Assumed that within a given TCP session, TCP segments 1,2 and 3 are transmitted from end-user terminal 15 to end-user terminal 11. Each TCP segment is segmented in 3 PDUs resulting in the following association:
TCP 1 <-> PDU 1,2,3
TCP 2 <-> PDU 4,5,6
TCP 3 <-> PDU 7,8,9

The TCP segment 4 is assumed to be lost, therefore the Base station subsystem generates the PDU 10,11,12 for TCP segment 5.

All PDUs are assumed to reach the base station sub-system within a very short time with respect to their transmission to the mobile.
1. The base station sub-system secures all PDUs as none of the TCP segments is acknowledged.
2. The base station sub-system decodes TCP segments identifier and identifies that the TCP segment 4 is missing.
3. The base station sub-system opens a downlink connection with the mobile and starts downlink transmission.
4. The base station sub-system generates a uplink PDU (PDU id 1) containing an acknowledgment of the N first TCP segments, the value of N is chosen smaller than three and depends on the target throughput.
5. The base station sub-system receives from end-user terminal 11 in the uplink a TCP acknowledgement for the first TCP segment. As the base station sub-system already generated the acknowledgement for the 3 first TCP segments, the base station sub-system filters out the uplink acknowledgement PDU. As the PDUs containing the TCP segment 1 were secured at the base station subsystem, the base station sub-system can now remove the PDU 1, 2, and 3.
6. The same process is applied for the reception of the PDU containing the acknowledgment of the TCP 2 and 3. As the mobile does not receive the TCP segment 4, it cannot acknowledge segment 5.
7. The base station sub-system receives the retransmitted TCP segment 4 with PDU identifier 13, 14, 15. It is forwarded as is to end-user 11.
8. The base station sub-system receives again the TCP segment 5. As the base station sub-system already sent the TCP segment to end-user 11, it does not send it again, it just secures it.
9. The base station sub-system receives the TCP segment 6 with PDU ids 16, 17, 18, as the PDUs 13, 14, 15 were not sent, the PDUs containing the TCP segment 6 are assigned the PDU ids 13, 14, 15, in order to avoid that end-user 11 requests them as not properly received.
10.The base station sub-system receives an uplink PDU from the mobile containing a TCP acknowledgement for the TCP segments 4 and 5. The PDU identifier has the value 4, PDU identifiers of 1, 2, 3 were already received in reception of the acknowledgement of TCP segments 1, 2 and 3. As the only uplink PDU sent so far to the core network had the identifier 1, the uplink PDU just received from end-user 11 shall be assigned the PDU identifier 2.

Alternatively, in case of GPRS or EDGE packet oriented radio communication networks, the method according to the invention can be performed at a Serving GPRS Support Node (SGSN) instead of at a base station subsystem without departing from the scope of the present invention.

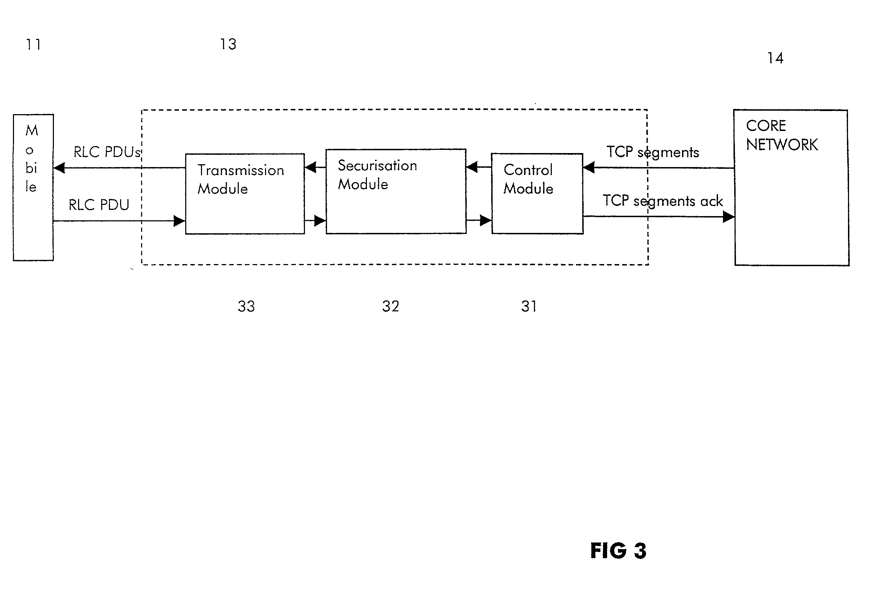

Figure 3 shows an implementation of the invention in a base station sub-system.

A base station subsystem according to the present invention comprises a TCP uplink control module 31, a TCP segment securisation module 32 and a TCP segment transmission module 33. TCP uplink module is connected to the core network side of the base station subsystem. TCP uplink module 31 is further connected to TCP securisation module 32 itself connected to TCP segment transmission module 33 which is located on the radio link side of the base station sub-system.

Once more the functionality of the different modules will be described in relation with downlink data transmission.

TCP uplink control module 31 is responsible for receiving /transmitting TCP segments from / to the core network and detecting if a TCP acknowledgement or non acknowledgement should be sent back to the core network before transmitting the TCP segment on the air interface.

In a preferred embodiment of the present invention, TCP uplink control module 31 is also responsible for deleting unnecessarily retransmitted TCP segments coming from the core network. TCP uplink control module 31 is also responsible for deleting acknowledgements received from the destination end-user terminal over the radio link if these acknowledgements have already be generated before transmitting the TCP segments over the radio link.

TCP securisation module 32 is responsible for encapsulating the TCP segments coming from the core network in a RLC PDU to secure the TCP data over the radio link.

TCP segment transmission module 33 is responsible for transmitting the TCP segments encapsulated in one or more RLC PDUs over the air interface.

Alternatively, the SGSN may comprises the previously described modules if the method has to be implemented in an Serving GPRS Support Node (SGSN) instead of at a base station subsystem.

## Claims

1. Method for transporting data segments from a transmitter (11, 13) to a receiver (13, 11) over a radio link (12), said data segments being protected by a first end-to-end error correction protocol (TCP), the transmission over said radio link (12) being further protected by a second error correction protocol (RLC), said method comprising the steps of:
- acknowledging properly received data segments before their transmission on said radio link (12);
- encapsulating said data segments in a protocol data unit of said second error correction protocol (RLC);
- transmitting said protocol data unit on said radio link (12) to said receiver (13, 11);
- correcting potential errors on said radio link (12) by using said second error correction protocol.

2. Method according to claim 1 further comprising the step of:
- deleting a data segment acknowledgement generated in accordance to said first end-to-end error correction protocol (TCP) at said receiver (13, 11) and received over the radio link at said transmitter (11, 13) said data segment has already been acknowledged before transmission on said radio link (12).

3. Method according to claim 1 further comprising the step of:
- deleting unnecessary repeated data segments before their transmission on said radio link (12).

4. Method according to claim 1, wherein said first error correction protocol is TCP (Transport Control Protocol).

5. Method according to claim 1, wherein said second error correction protocol is RLC (Radio Link Control) protocol.

6. Transmitter (11, 13) dedicated to transmit data segments to a receiver (13, 11) over a radio link (12), said data segments being protected by a first end-to-end error correction protocol (TCP), the transmission over said radio link (12) being further protected by a second error correction protocol (RLC), said transmitter (11, 13) being **characterised in that** it comprises:
- a first end-to-end correction protocol (TCP) control module (31) for acknowledging properly received data segments before their transmission on said radio link (12);
- a securisation module (32) for encapsulating said data segments in a protocol data unit of said second error correction protocol (RLC);
- a transmission module (33) for transmitting said protocol data unit on said radio link to said receiver (13, 11).

7. Transmitter according to claim 6 being a base station subsystem (13) or a Serving GPRS Support Node.

8. Transmitter according to claim 6 being an end-user terminal (11).

9. Radio communication system comprising a core network (14), a base station subsystem (13), an end-user terminal (11) connectable to the radio communication system over the base station subsystem, said radio communication system being **characterised in that** said end-user terminal (11) and said base station sub-system (13) are transmitters according to claim 6.
